# EUROPEAN PATENT APPLICATION

(11) **EP 3 935 936 A1**
(43) Date of publication of application: **12.01.2022**
(21) Application number: 21180505.6
(22) Date of filing: 21.06.2021
(51) Int. Cl.: A01G 9/14, A01G 9/24, A01G 9/26, A01G 31/02

(54) **HYDROPONIC FACILITY SYSTEM FOR SAVING ENERGY**

(30) Priority: 10.07.2020 KR 20200085173
(71) Applicant: Jo, Jang Hee, Gyeonggi-do 11104 (KR)
(72) Inventor: Jo, Jang Hee, Gyeonggi-do 11104 (KR)
(74) Representative: M. Zardi & Co S.A.

(57) **Abstract**

The present invention relates to a hydroponic facility for cultivating crops without soil by using a culture solution, and more particularly to a hydroponic facility system for helping to save energy and grow crops in a hydroponic facility, which, when crops are grown through hydroponic facilities using a hydroponic method in many farms, can prevent the destruction of a natural environment attributable to the depletion of underground resources (water resources) and can reduce the economic burden of farmers attributable to a large amount of electricity consumed for constant temperature and constant humidity.

## Description

### CROSS-REFERENCE TO RELATED APPLICATION

This application claims the benefit of Korean Patent Application No. 10-2020-0085173 filed on July 10, 2020, which is hereby incorporated by reference herein in its entirety.

### BACKGROUND

### 1. Technical Field

The present invention relates to a hydroponic facility for cultivating crops without soil by using water, to which a nutrient medium is added, or pure water (hereinafter referred to as the "culture solution"), and more particularly to a hydroponic facility system for helping to save energy and grow crops in a hydroponic facility, which, when crops are grown through hydroponic facilities using a hydroponic method in many farms, can prevent the destruction of a natural environment attributable to the depletion of underground resources (water resources) and can reduce the economic burden of farmers attributable to a large amount of electricity consumed for constant temperature and constant humidity.

### 2. Description of the Related Art

In general, hydroponics is a method of cultivating crops using a culture solution (water with a nutrient medium added thereto) without soil. Hydroponics is designed to culture crops by directly supply a culture solution containing various nutrients to the crops instead of receiving water and nutrients necessary for the growth of the crops from the soil.

When crops are grown using hydroponics, it can accelerate the growth of crops and control the growth environment of crops in detail compared to farming methods of growing crops through the soil, so that not only an increase in production but also the control of harvest time is possible. Furthermore, it is possible to stably grow crops in areas with poor soil quality or in areas where it is difficult to grow crops.

Hydroponic facilities using hydroponics include a greenhouse such as a glasshouse configured to maintain appropriate temperature and humidity to help the growth of crops in many farms, and a water tank for hydroponics installed inside the greenhouse. In addition, according to the culture medium filled in the water tank and the state or type of crops immersed in the water tank, a water tank cover is additionally installed over the water tank, and thus it is possible to grow crops while maintaining the temperature and humidity suitable for the growth of crops inside the water tank.

However, in conventional hydroponic facilities, serious threats are posed to natural environments due to the depletion of underground resources because it is necessary to use a large quantity of water resources in order to grow crops. Furthermore, in order to maintain constant temperature and constant humidity required for the growth of crops, a large amount of electricity must be used, and thus a large cost burden is imposed on farms.

### [Related Art Documents]

Patent document 1: KR 10-0937744 B1 published on January 12, 2010
Patent document 2: KR 20-0480429 Y1 published on May 18, 2016
Patent document 3: KR 20-0480430 Y1 published on May 18, 2016

### SUMMARY

Therefore, the present invention has been proposed to overcome the above-described problems, and an object of the present invention is to provide a hydroponic facility system for helping to save energy and grow crops in a hydroponic facility, which, when crops are grown through hydroponic facilities using a hydroponic method in many farms, can prevent the destruction of a natural environment attributable to the depletion of underground resources (water resources) and can reduce the economic burden of farmers attributable to a large amount of electricity consumed for constant temperature and constant humidity.

According to an aspect of the present invention, there is provided a hydroponic facility system for helping to save energy and grow crops, the hydroponic facility system including: a greenhouse; a hydroponic facility including horizontal pipes installed alternately horizontally in a meandering shape inside the greenhouse and configured such that crops are grown therein; a water tank configured to collect and store water pulled up from a water resource through a deep-well motor, and to supply the stored water to the horizontal pipes of the hydroponic facility through a main pipe; a plurality of generators arranged at ends of the horizontal pipes in a longitudinal direction, and configured to generate electricity using hydraulic power of water drained to the ends of the horizontal pipes; an auxiliary water tank configured to store remaining surplus water used when electricity is generated through the generators; one or more sprinklers installed in the greenhouse, and configured to spray the surplus water, pulled up from the auxiliary water tank by a constant-humidity motor, into an inside of the greenhouse including crops grown in the horizontal pipes; a plurality of radiators installed in the inside of the greenhouse, and configured to maintain a constant temperature; a boiler connected to the radiators through piping, and configured to receive the surplus water stored in the auxiliary water tank, to receive the electricity produced by the generators, and to be operated, heat the supplied surplus water, and then supply the heated water to the radiators, thereby maintaining constant temperature of the greenhouse; and rubble embedded and installed under a bottom of the greenhouse, and configured to drain the water, sprayed from the sprinklers, into the ground and thus return the sprayed water to nature.

Each of the generators may include: a water turbine generator configured to generate electricity using hydraulic power of water drained to a corresponding one of the ends of the horizontal pipes; a booster configured to boost an AC voltage produced by the water turbine generator; a converter configured to convert the AC voltage boosted by the booster into a DC voltage; a storage battery configured to store the DC voltage obtained by the converter; an inverter configured to convert the DC voltage of the storage battery into an AC voltage; and an automatic transfer switch configured to selects any one of the AC voltages supplied from the booster and the inverter and supply it to a distribution board electrically connected to the boiler through wiring.

The boiler, the constant-humidity motor, the deep-well motor, and lights installed in the greenhouse may be supplied with and operated by the power of the booster or the power of the storage battery.

The auxiliary water tank may be embedded and installed in the ground so that it is located below the generators.

### BRIEF DESCRIPTION OF THE DRAWINGS

The above and other objects, features, and advantages of the present invention will be more clearly understood from the following detailed description taken in conjunction with the accompanying drawings, in which:
FIG. 1 is a conceptual diagram showing a hydroponic facility system according to the present invention;
FIG. 2 is a three-dimensional view schematically showing an upright-type hydroponic facility system according to a first embodiment of the present invention;
FIG. 3 is a plan view schematically showing the upright-type hydroponic facility system according to the first embodiment of the present invention;
FIG. 4 is a front view schematically showing the upright-type hydroponic facility system according to the first embodiment of the present invention;
FIG. 5 is a diagram schematically illustrating the configuration of a generator according to the present invention;
FIG. 6 is a plan view schematically illustrating a flat-type hydroponic facility system according to a second embodiment of the present invention; and
FIG. 7 is a front view schematically illustrating the flat-type hydroponic facility system according to the second embodiment of the present invention.

### DETAILED DESCRIPTION

The advantages and features of the present invention and methods of achieving them will become apparent with reference to the embodiments described below in detail in conjunction with the accompanying drawings. However, the present invention is not limited to the embodiments disclosed below, but may be implemented in various different forms.

In the present specification, embodiments are provided to make the disclosure of the present invention complete and to fully convey information about the scope of the present invention to those of ordinary skill in the art to which the present invention pertains. The invention is only defined by the scope of the claims. Accordingly, in some embodiments, well-known components, well-known operations, and well-known techniques have not been specifically described in order to avoid obscuring the present invention.

Furthermore, like reference numerals refer to like components throughout the specification. In addition, the terms used (mentioned) herein are intended to describe the embodiments, but are not intended to limit the present invention. In this specification, a singular expression also includes a plural expression unless specifically stated otherwise in the phrase. In addition, the term "include" or "have" does not exclude the presence or addition of one or more additional elements and operations.

Unless otherwise defined, all terms (including technical and scientific terms) used herein may be used in the senses that are commonly understood by those of ordinary skill in the art to which the present invention pertains. Furthermore, terms that are defined in commonly used dictionaries are not to be interpreted ideally or excessively unless defined.

The technical features of the present invention will be described in detail below with reference to the accompanying drawings.

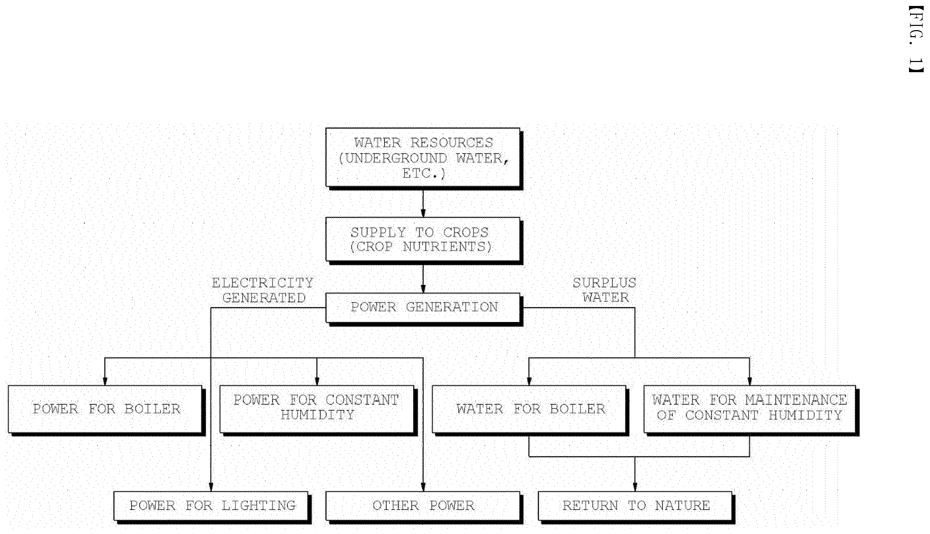

FIG. 1 is a conceptual diagram showing a hydroponic facility system according to the present invention, which illustrates a process of generating electricity using water in a water source and using surplus water as water.

Referring to FIG. 1, the hydroponic facility system according to the present invention is a hydroponic facility for cultivating crops using hydroponics. The hydroponic facility system is a system intended to help to save energy and grow crops in a hydroponic facility, which prevents the destruction of a natural environment attributable to the depletion of underground resources and reduces the economic burden on farms attributable to the use of electricity for constant temperature and humidity.

The hydroponic facility system supplies water from a water source (a water supply source) such as groundwater to a hydroponic facility to grow crops, and generates electricity through a generator using water drained from the hydroponic facility to use the electricity as a power source for a boiler used to maintain constant temperature, a constant humidity power source for constant humidity, a lighting power source, and other power sources. In addition, the surplus water remaining after power has been generated through the generator is used as water for a boiler and the maintenance of constant humidity, and is then drained back and returned to nature.

In the hydroponic facility system of the present invention, the source water does not generate power while continuously supplying and discharging a culture solution (source water with a nutrient medium added thereto, or pure water), but may be provided to supply a culture solution and generate power when necessary by using a power supply and an installed valve.

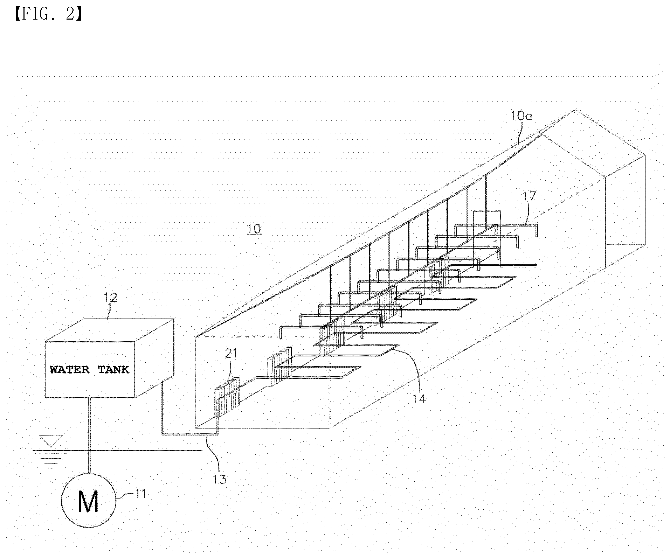

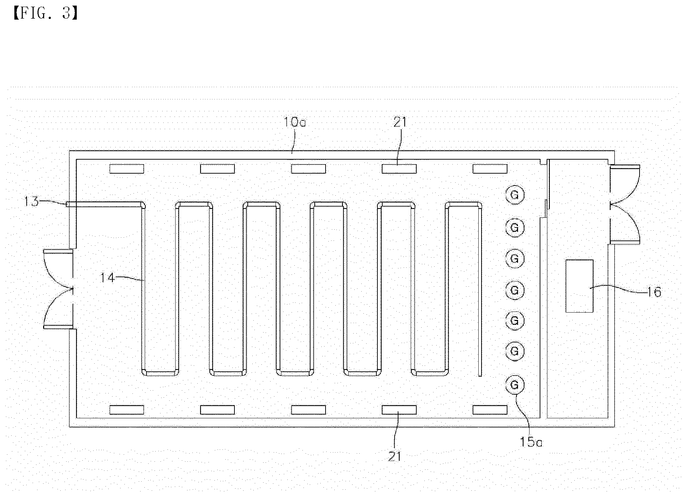

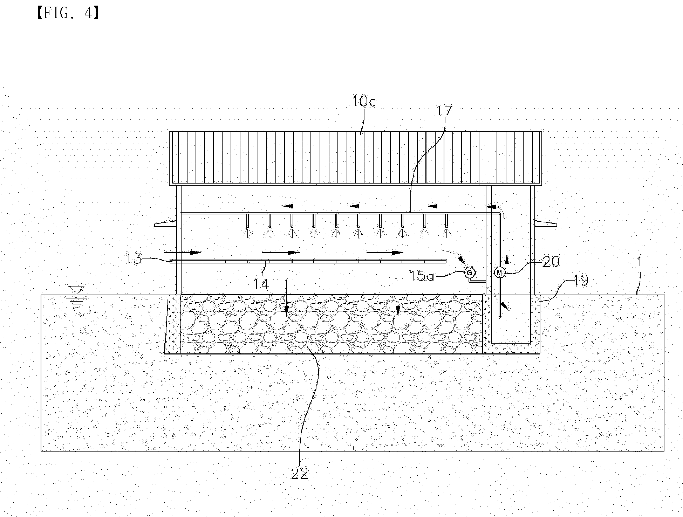

FIGS. 2 to 4 are views schematically showing an upright-type hydroponic facility system according to a first embodiment of the present invention, wherein FIG. 2 is a three-dimensional view, FIG. 3 is a plan view, and FIG. 4 is a front view.

Referring to FIGS. 2 to 4, the upright-type hydroponic facility system 10 according to the first embodiment of the present invention includes a deep-well motor 11 configured to draw and supply water from a water source such as groundwater or the like, and a water collection tank 12 configured to collect water supplied from the deep-well motor 11.

The water (a crop nutrient source) collected in the water collection tank 12 is supplied to a hydroponic facility 14 installed inside a greenhouse (or a glasshouse) 10a through a main pipe 13. For example, the hydroponic facility 14 hydroponically cultivates crops through horizontal pipes, in which case the horizontal pipes may be PVC pipes. As shown in FIG. 3, these horizontal pipes may be alternately installed horizontally in a meandering shape.

As shown in FIGS. 3 and 4, the water drained from the hydroponic facility 14 is supplied to water turbine generators 15a. In particular, the plurality of water turbine generators 15a may be arranged in the longitudinal direction at the ends of the horizontal pipes of the hydroponic facility 14 that are installed alternately horizontally in a meandering shape.

Power generation equipment 15 is installed at the ends of the horizontal pipes of the hydroponic facility 14. Through the water supplied from the hydroponic facility 14, the power generation equipment 15 generates electricity to supply the electricity to a boiler 16, a sprinklers 17, and a lighting (not shown) built in the upright-type hydroponic facility system 10a.

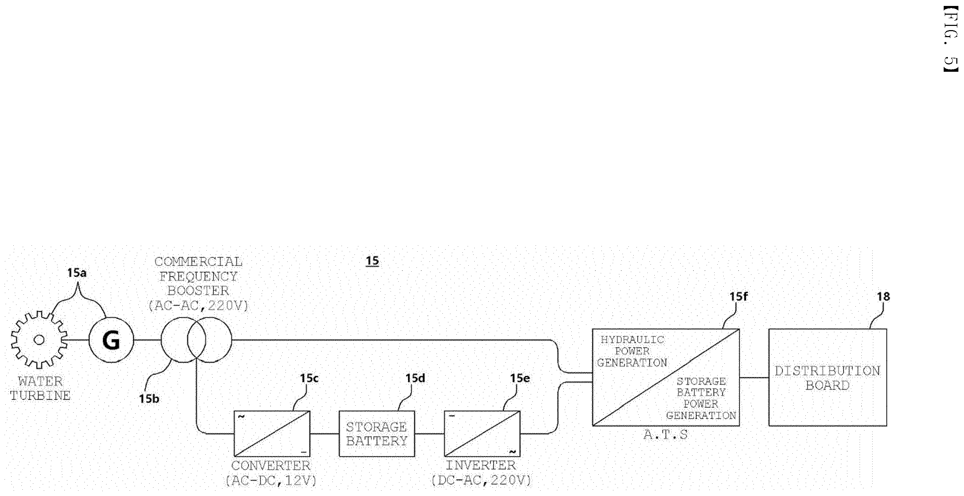

FIG. 5 is a diagram schematically illustrating the configuration of a generator according to the present invention.

Referring to FIG. 5, the power generation equipment 15 according to the present invention includes the water turbine generators 15a configured to generate electricity by a hydroelectric power generation method using water supplied from the hydroponic facility 14.

The plurality of water turbine generators 15a is installed at the ends of the horizontal pipes of the hydroponic facility 14 in the longitudinal direction, and rotate water turbines through the water drained from the horizontal pipes and collected at the ends to produce electricity. Since the plurality of water turbine generators 15a is installed at the ends of the horizontal pipes in the longitudinal direction, it may be possible to maximize the electricity production efficiency.

In addition, the power generation equipment 15 includes: a booster 15b configured to boost the alternating current (AC) voltage produced from the water turbine generator 15a in order to supply it to the distribution board 18 after stabilizing the electricity produced from the water turbine generator 15a; a converter 15c configured to convert the AC voltage boosted by the booster 15b into a DC voltage; a storage battery 15d configured to store the DC voltage converted by the converter 15c; an inverter 15e configured to convert the DC voltage of the storage battery 15d into an AC voltage; and an automatic transfer switch (ATS) 15f configured to select any one of the AC voltages supplied from the booster 15b and the inverter 15e and supply the selected AC voltage to a distribution board 18.

The electricity produced through the plurality of water turbine generators 15a is supplied to the distribution board 18, and is used as the operating source power of the boiler 16, the sprinklers 17, the deep-well motor 11, and/or the constant-humidity motor 20 electrically connected through wiring. The remaining surplus electricity is stored in the storage battery 15d and is then used as source power for various lighting devices or other devices installed inside the greenhouse 10a.

Meanwhile, as shown in FIG. 4, the surplus water used in the plurality of water turbine generators 15a is collected in an auxiliary water tank 19.

The auxiliary water tank 19 is embedded and installed in the ground 1 so that it is located below the water turbine generators 15a. This auxiliary water tank 19 collects the water supplied to the plurality of water turbine generators 15a at the ends of the horizontal pipes of the hydroponic facility 14. The surplus water collected in the auxiliary water tank 19 is supplied to the sprinklers 17 through the constant-humidity motor 20 to be used to maintain constant humidity.

The constant-humidity motor 20 supplies the surplus water collected in the auxiliary water tank 19 to the sprinklers 17 through piping. The sprinklers 17 control the humidity of the greenhouse 10a by spraying the surplus water, supplied through the constant-humidity motor 20, into the interior of the greenhouse 10a, including the hydroponic facility 14.

In addition, some of the surplus water collected in the auxiliary water tank 19 is supplied to the boiler 16.

Meanwhile, the electricity produced through the power generation equipment 15 is supplied to the boiler 16, the sprinklers 17, various lights (not shown) and other devices, installed in the greenhouse 10a, through the distribution board 18.

The boiler 16 is connected to a plurality of radiators 21 installed inside the greenhouse 10a through piping. The plurality of radiators 21 may be installed in lines in the greenhouse 10a with the hydroponic facility 14 interposed therebetween. The hot water heated by the boiler 16 is supplied to the radiators 21 through piping, and keeps the temperature of the greenhouse 10a constant.

As shown in FIG. 4, rubble 22 is buried in the floor of the greenhouse 10a, i.e., the floor of the greenhouse structure so that the water sprayed from the sprinklers 17 is drained and returned to nature.

The operation and operational effects of the upright-type hydroponic facility system according to the first embodiment of the present invention having the above-described configuration will be described below with a focus on the flows of water.

As shown in FIG. 2, groundwater is pulled up by using the deep-well motor 11, and is stored in the water collection tank 12. In addition, the groundwater stored in the water collection tank 12 is supplied to the horizontal pipes of the hydroponic facility 14 through the main pipe 13, and is supplied to the crops installed in the horizontal pipes.

Thereafter, as shown in FIGS. 4 and 5, the water drained to the ends of the horizontal pipes of the hydroponic facility 14 is supplied to the plurality of water turbine generators 15a, and the plurality of water turbine generators 15a generates electricity through hydraulic power resulting from the water drained from the hydroponic facility 14 and then supplies it to the distribution board 18.

Thereafter, the surplus water remaining after the electricity production of the power generation equipment 15 is collected into the auxiliary water tank 19, and the surplus water collected in the auxiliary water tank 19 is supplied to the sprinklers 17 installed the upper portion of the greenhouse 10a by the constant-humidity motor 20. Furthermore, the sprinklers 17 spray the surplus water, supplied from the constant-humidity motor 20, into the inside of the greenhouse 10a, including the crops installed in the hydroponic facility 14, thereby keeping the internal humidity of the greenhouse 10a constant.

Meanwhile, the electricity produced through the power generation equipment 15 is used as source power for the devices configured to maintain a constant temperature and constant humidity. In other words, the generated electricity is used as source power for the boiler 16 configured to maintain constant temperature, and source power for the constant-humidity motor 20 and the solenoid valves of the sprinklers 17 configured to maintain constant humidity. In addition, the generated electricity is also used as source power for various lights and other devices installed inside the greenhouse 10a.

In addition, as shown in FIG. 4, the surplus water sprayed from the sprinklers 17 into the greenhouse 10a is drained to the stratum through the rubble 22 installed on the floor of the greenhouse 10a and returned to nature.

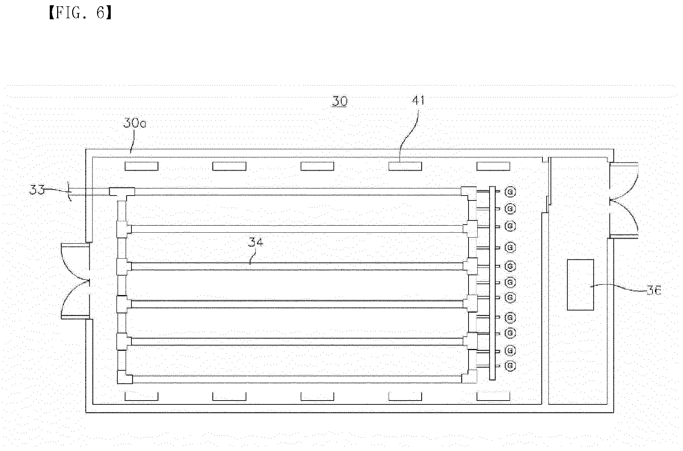

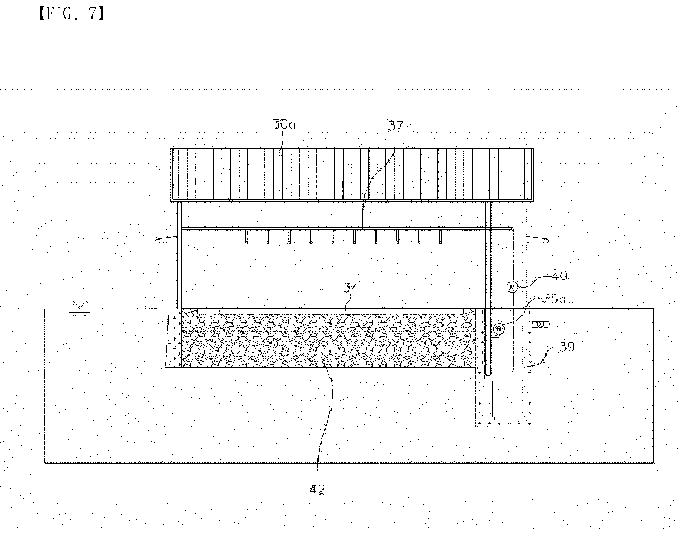

FIG. 6 is a plan view schematically illustrating a flat-type hydroponic facility system according to a second embodiment of the present invention, and FIG. 7 is a front view of the flat-type hydroponic facility system according to the second embodiment of the present invention.

Referring to FIGS. 6 and 7, the flat-type hydroponic facility system 30 according to the second embodiment of the present invention is different from the upright-type hydroponic facility system 10 according to the first embodiment of the present invention only in terms of the installation locations of individual components and the configuration of piping according to the installation location of a hydroponic facility 34. The flat-type hydroponic facility system 30 is the same as the upright-type hydroponic facility system 10 in terms of a deep-well motor (not shown), a water collection tank (not shown), a main pipe 33, the hydroponic facility 34, power generation equipment (not shown) (including the water turbine generators 15a of FIG. 5, etc.), a boiler 36, sprinklers 37, an auxiliary water tank 39, a constant-humidity motor 40, radiators 41, and rubble 42.

As described above, in the hydroponic facility systems according to the embodiments of the present invention, water resources are supplied and used for the growth of crops, and are also reused to produce electricity. In addition, the generated electricity is used as source power for lighting, the supply of electricity in the facility, and the maintenance of constant temperature and humidity. In addition, the surplus water remaining after being used for electricity production is recycled as a resource for constant temperature and constant humidity and a resource for boiler operation, and the remaining surplus water resource used for maintaining constant temperature and constant humidity and boiler operation is drained and returned to nature. As a result, when crops are grown through the hydroponic facilities using a hydroponic method in many farms, the present invention can prevent the destruction of a natural environment attributable to the depletion of underground resources (water resources), and can reduce the economic burden of farmers attributable to a large amount of electricity consumed for constant temperature and constant humidity.

Furthermore, in the hydroponic facility systems according to the present invention, the components, particularly the hydroponic pipes, can be reused, so that they may be used semi-permanently. However, since a storage battery that stores the electricity produced by the power generation equipment has limited lifespan, it is replaced when the efficiency thereof decreases.

Although the technical spirit of the present invention has been specifically described in conjunction with the embodiments, the above-described embodiments are intended to illustrate the present invention, but are not intended to limit the present invention. As described above, it will be easily understood by those of ordinary skill in the art that various embodiments may be possible through the combination of the embodiments of the present invention within the scope of the technical spirit of the present invention.

## Claims

1. A hydroponic facility system for helping to save energy and grow crops, the hydroponic facility system comprising:
a greenhouse;
a hydroponic facility including horizontal pipes installed alternately horizontally in a meandering shape inside the greenhouse and configured such that crops are grown therein;
a water tank configured to collect and store water pulled up from a water resource through a deep-well motor, and to supply the stored water to the horizontal pipes of the hydroponic facility through a main pipe;
a plurality of generators arranged at ends of the horizontal pipes in a longitudinal direction, and configured to generate electricity using hydraulic power of water drained to the ends of the horizontal pipes;
an auxiliary water tank configured to store remaining surplus water used when electricity is generated through the generators;
one or more sprinklers installed in the greenhouse, and configured to spray the surplus water, pulled up from the auxiliary water tank by a constant-humidity motor, into an inside of the greenhouse including crops grown in the horizontal pipes;
a plurality of radiators installed in the inside of the greenhouse, and configured to maintain a constant temperature;
a boiler connected to the radiators through piping, and configured to receive the surplus water stored in the auxiliary watertank, to receive the electricity produced by the generators, and to be operated, heat the supplied surplus water, and then supply the heated water to the radiators, thereby maintaining constant temperature of the greenhouse; and
rubble embedded and installed under a bottom of the greenhouse, and configured to drain the water, sprayed from the sprinklers, into the ground and thus return the sprayed water to nature;
wherein each of the generators comprises:
a water turbine generator configured to generate electricity using hydraulic power of water drained to a corresponding one of the ends of the horizontal pipes;
a booster configured to boost an AC voltage produced by the water turbine generator;
a converter configured to convert the AC voltage boosted by the booster into a DC voltage;
a storage battery configured to store the DC voltage obtained by the converter;
an inverter configured to convert the DC voltage of the storage battery into an AC voltage; and
an automatic transfer switch configured to selects any one of the AC voltages supplied from the booster and the inverter and supply it to a distribution board electrically connected to the boiler through wiring.

2. The hydroponic facility system of claim 1, wherein the boiler, the constant-humidity motor, the deep-well motor, and lights installed in the greenhouse are supplied with and operated by power of the booster or power of the storage battery.

3. The hydroponic facility system of claim 1, wherein the auxiliary water tank is embedded and installed in a ground so that it is located below the generators.
